# EUROPÄISCHE PATENTSCHRIFT

(11) **EP 3 790 748 B1**
(45) Veröffentlichungstag und Bekanntmachung des Hinweises auf die Patenterteilung: **19.03.2025**
(21) Anmeldenummer: 19724117.7
(22) Anmeldetag: 03.05.2019
(51) Int. Cl.: B60G 17/052, B60G 17/015

(54) **LUFTFEDERSTEUERUNGSSYSTEM UND LUFTFEDERSYSTEM SOWIE FAHRZEUG DAMIT UND VERFAHREN DAFÜR**
PNEUMATIC SPRING CONTROL SYSTEM, PNEUMATIC SPRING SYSTEM, VEHICLE COMPRISING SAME, AND METHOD FOR SAME
SYSTÈME DE COMMANDE DE RESSORTS PNEUMATIQUES AINSI QUE VÉHICULE MUNI DUDIT SYSTÈME ET PROCÉDÉ AFFÉRENT

(30) Priorität: 08.05.2018 DE 102018111003
(43) Veröffentlichungstag der Anmeldung: 17.03.2021
(73) Patentinhaber: ZF CV Systems Europe BV, 1170 Brussels (BE)
(72) Erfinder: ZAK, Przemyslaw, 50-436 Wroclaw (PL); FILTER, Stefan, 30419 Hannover (DE); JOVERS, Ingo, 30989 Gehrden (DE); LUCAS, Johann, 31319 Sehnde (DE); MORADI DEHDEZI, Nosrat, 30539 Hannover (DE); THIMM, Andreas, 31157 Sarstedt (DE)
(74) Vertreter: Ohlendorf, Henrike
(86) Internationale Anmeldenummer: PCT/EP2019/061423
(87) Internationale Veröffentlichungsnummer: WO 2019/215046

(56) Entgegenhaltungen:
- EP-A1- 2 765 325
- EP-A1- 3 072 716
- DE-A1- 10 245 815
- DE-A1- 102014 101 084
- DE-T5- 112015 000 259
- US-A1- 2006 267 297
- US-A1- 2015 273 972
- US-A1- 2017 211 649

## Beschreibung

Die Erfindung betrifft den Bereich der Luftfedersysteme für Nutzfahrzeuge oder Personenkraftwagen. Es sind Luftfedersysteme für Fahrzeuge bekannt, die mit dem Einsatz von Luftfedern den Fahrkomfort und die Sicherheit verbessern. Dies wird beispielsweise dadurch realisiert, dass Aufbau und Insassen eines Fahrzeuges durch die Luftfedern vor Stößen geschützt werden, die durch Bodenunebenheiten während der Fahrt verursacht werden. Außerdem können durch Bodenunebenheiten während der Fahrt verursachte Schwingungen gedämpft oder sogar verhindert werden.

Bei den Luftfedersystemen ist weiter zwischen einstellbaren und nicht einstellbaren Federsystemen zu unterscheiden. Einstellbare Luftfedersysteme weisen üblicherweise eine variable Gasmasse, vorzugsweise Luftmasse, der Luftfedern auf, während die Gasmasse der Luftfedern bei nicht einstellbaren Luftfedersystemen fest ist. Nicht einstellbare Luftfedern sind primär für die oben genannten Ziele einsetzbar, während einstellbare Luftfedern erweiterte Funktionen ermöglichen. Eine derartige erweiterte Funktion eines einstellbaren Luftfedersystems ist beispielsweise die Niveauregulierung, bei der eine Anpassung der Bodenfreiheit eines Fahrzeugs, beispielsweise in Abhängigkeit einer Fahrzeugbeladung, konstant gehalten wird.

Einstellbare oder variable Luftfedersysteme weisen für die Realisierung weiterer Funktionen ein Luftfedersteuerungssystem auf, das beispielsweise in Abhängigkeit von Sensoren die Gasmasse in einem Federelement variiert. Auch ein manueller Eingriff mit Steuersignalen, wie es beispielsweise bei einer Absenkautomatik in einem Bus, zur Erleichterung des Ein- und Ausstiegs von Passagieren bekannt ist, ist bekannt.

Vorliegend soll ein einstellbares Luftfedersystem betrachtet werden, bei dem eine variable Gasmasse in Luftfedern, insbesondere zur Federung eines Fahrzeugs, verwendet wird.

Wie bereits oben genannt, weisen derartige Luftfedersysteme in der Regel ein Luftfedersteuerungssystem auf, das an eine Vielzahl von Sensoren sowie Aktoren zum Steuern der Gasmasse der Luftfedern angeschlossen ist. Einem Luftfedersteuerungssystem, das üblicherweise Bestandteil eines weitere Funktionen umfassenden Steuergerätes ist, wird somit eine Vielzahl von Messwerten zugeführt. Außerdem muss das Steuergerät eine Vielzahl von Befehlen aussenden, um die Aktoren anzusteuern. Zudem muss das Steuergerät eine schnelle Reaktionszeit aufweisen, um aus der Vielzahl der Messwerte entsprechende Steuersignale zu erzeugen.

Ein Steuergerät, das das Luftfedersteuerungssystem umfasst, unterliegt daher einem hoch komplexen Entwicklungsaufwand und benötigt eine sehr hohe Rechenleistung. Insbesondere ist im Falle des Ausfalles des Steuergerätes das gesamte Luftfedersystem außer Betrieb gesetzt.

DE 11 2015 000259 T5 offenbart eine Luftfederungssteuerung zum Steuern von Luftfederungsmodulen zum Federn eines Fahrerhauses eines Fahrzeugs. Die Luftfedersteuerung weist elektrische Luftfederungs-Steuereinheiten auf, wobei jede Luftfederungs-Steuereinheit zum Steuern eines Luftfederungsmoduls ausgebildet ist. Ein Steuermodul wendet einen Luftfederungs-Steueralgorithmus zum Definieren einer gewünschten Leistung der Luftfederung an. Die Luftfederungs-Steuereinheiten und das Steuermodul sind mit einem Kommunikationsbus verbunden. Ein PID-Regler ist zum Bestimmen von spezifischen Steuerparametern zum Anwenden durch die Luftfederungs-Steuereinheiten auf die Luftfederungsmodule ausgebildet.

DE 102 45 815 A1 offenbart ein Luftfederungssystem für ein Fahrzeug. Einer Vorderachse des Fahrzeugs ist eine Druckluftsteuervorrichtung zugeordnet. Die Druckluftsteuervorrichtung weist eine elektronische Steuereinheit auf, die mit einem 3/2-Ventil funktional verbunden ist und das 3/2-Ventil steuert. Die elektronische Steuereinheit ist mit einer Bedieneinheit über eine Powerline-Communication-Verbindung funktional verbunden. Die Bedieneinheit dient auch als Schnittstelle zwischen der Powerline-Communication-Verbindung und einem CAN-Bus des Fahrzeugs.

DE 10 2014 101 084 A1 offenbart eine Fahrzeugregeleinrichtung mit einem ersten elektronischen Steuergerät, das an Achsen eines Fahrzeugs angeordnete Niveaugeber so ansteuert, dass mittels der Niveaugeber ein Soll-Wert eines Niveaus des Fahrzeugs eingestellt wird. Der Soll-Wert des Niveaus oder ein Soll-Wert für einen Luftdruck in einem Luftfederbalg, der durch das erste elektronische Steuergerät angesteuert wird, wird dem ersten elektronischen Steuergerät durch ein zweites elektronisches Steuergerät vorgegeben, in dem Routinen einer Bremsdruckregelung (EBS) und/oder einer Bremsschlupfregelung (ABS) und/oder einer Antriebsschlupfregelung (ASR) und/oder einer Fahrdynamikregelung (ESP) und/oder eines Fahrerassistenzsystems (ACC) implementiert sind.

EP 2 765 325 A1 offenbart eine Luftfederanordnung mit einem durch einen Schrittmotor angetriebenen pneumatischen Ventil.

Aufgabe der vorliegenden Erfindung ist es daher, ein Luftfedersystem oder ein Luftfedersteuerungssystem zu finden, das weniger komplex ist und beispielsweise an unterschiedliche Fahrzeuge oder Fahrzeugtypen in einfacher Weise anpassbar ist. Jedenfalls soll ein gegenüber dem Stand der Technik vorteilhaftes Luftfedersystem oder Luftfedersteuerungssystem gefunden werden.

Hierzu betrifft die Erfindung ein Luftfedersteuerungssystem für ein Nutzfahrzeug oder einen Personenkraftwagen. Das Luftfedersteuerungssystem kann auch Electronic Controlled Air Suspension (ECAS) genannt werden. Ein Nutzfahrzeug ist beispielsweise ein Omnibus oder ein Lastkraftwagen, umfasst aber auch einen Lastzug.

Das erfindungsgemäße Luftfedersteuerungssystem weist eine Hauptsteuereinheit zum Betreiben des Luftfedersteuerungssystems auf. Außerdem umfasst das Luftfedersteuerungssystem mindestens zwei Nebensteuereinheiten. Die Nebensteuereinheiten sind jeweils über eine Datenverbindung mit der Hauptsteuereinheit verbunden. Die Datenverbindung ist entweder eine gemeinsame oder eine separate Datenverbindung. Das heißt, dass bei einer gemeinsamen Datenverbindung die Hauptsteuereinheit und beide Nebensteuereinheiten an einer gemeinsamen Datenleitung, beispielsweise aus zwei oder mehr elektrischen Leitern, angeschlossen sind. Ist die Datenverbindung als separate Datenverbindung ausgestaltet, bedeutet das, dass zwischen der Hauptsteuereinheit und jeder der mindestens zwei Nebensteuereinheiten eine separate Datenleitung vorgesehen ist.

Jede der Nebensteuereinheiten weist jeweils mindestens einen Ausgang auf. Der Ausgang dient zum Ansteuern mindestens eines mit dem Ausgang verbindbaren Aktors. Ein Aktor ist beispielsweise ein Verstellantrieb für ein Ventil. Vorzugsweise ist der Aktor eine elektrische Magnetventilkomponente, die zum Beispiel eine pneumatische oder hydraulische Ventilkomponente ist. Besonders bevorzugt ist das Ventil ein Solenoid-Ventil.

In den Nebensteuereinheiten ist jeweils mindestens eine Funktion zum Erzeugen von Steuersignalen am Ausgang hinterlegt.

Das heißt, die Nebensteuereinheit ist vorzugsweise eingerichtet, einen Ausgang in Abhängigkeit einer hinterlegten Funktion, die in der Nebensteuereinheit hinterlegt ist, anzusteuern.

Die Hauptsteuereinheit weist Mittel auf, um die hinterlegte Funktion aufzurufen und/oder zu parametrieren. Dies erfolgt durch Aussenden von Befehlen über die Datenverbindung von der Hauptsteuereinheit zur Nebensteuereinheit, deren Funktion aufgerufen und/oder parametriert werden soll.

Ein Aufrufen ist hier insbesondere derart zu verstehen, dass durch Aufrufen einer Funktion die Nebensteuereinheit mit dieser Funktion in Betrieb genommen wird und daraufhin Steuersignale am Ausgang der Nebensteuereinheit in Abhängigkeit der aufgerufenen Funktion erzeugt werden.

Der Begriff Funktion beschränkt sich hier nicht auf eine mathematische Funktion im Sinne einer Abbildung einer Beziehung zwischen zwei Mengen. Vielmehr ist vorliegend der Begriff Funktion auch im Sinne seiner Verwendung in der Informatik zu verstehen. Demnach ist eine Funktion ein Programmkonstrukt, das ohne Eingabewerte, oder vorzugsweise mit Eingabewerten, beispielsweise umfassend Eingabedaten und/oder Sensordaten und/oder eine Parametrierung, Ausgabewerte erzeugt.

Gegenüber herkömmlichen Luftfedersteuerungssystemen, die lediglich eine einzige Steuereinheit aufweisen, mit der alle Aktuatoren über deren Ausgänge angesteuert werden, ist die Steuereinheit gemäß der Erfindung also modular aufgebaut. Die Hauptsteuereinheit der vorliegenden Erfindung dient im Wesentlichen nur noch zum Aufruf und/oder zur Parametrierung der in den Nebensteuereinheiten hinterlegten Funktionen.

Eine hinterlegte Funktion kann beispielsweise eine Niveauregulierungsfunktion sein. Demnach wird bei Bedarf die Niveauregulierungsfunktion von der Hauptsteuereinheit in den Nebensteuereinheiten aufgerufen. Als Parameter kann die Hauptsteuereinheit den Nebensteuereinheiten beispielsweise eine gewünschte konstant zu haltende Bodenfreiheit vorgeben. Bei Aufruf der Niveauregulierungsfunktion werden dann in den Nebensteuereinheiten jeweils Ventile so angesteuert, dass Gasmassen in oder aus den Luftfedern so geleitet werden, um die vorgegebene Bodenfreiheit im Wesentlichen konstant zu halten.

Soll - um beim obigen Beispiel der Niveauregulierungsfunktion zu bleiben - von allen Nebensteuereinheiten eine Niveauregulierung einer oder mehrere Luftfedern ausgeführt werden, so kann die Hauptsteuereinheit beispielsweise in einem einzigen Rundruf an alle Nebensteuereinheiten die entsprechende Funktion oder Niveauregulierungsfunktion aufrufen. Die Hauptsteuereinheit muss hierzu nach dem Aufruf der Niveauregulierungsfunktion nicht mehr interagieren.

Ein modularer Aufbau des Luftfedersteuerungssystems ist dadurch möglich, sodass beispielsweise unabhängig von der Anzahl der nötigen Nebensteuereinheiten immer dieselbe Hauptsteuereinheit im Fahrzeug verwendet werden kann. Zusätzlich kann ein Datenverkehr auf der oder den Datenverbindungen stark reduziert oder sogar nach Aufruf einer Funktion komplett vermieden werden. Die Bandbreite einer Datenverbindung kann somit für andere Übertragungen verwendet werden.

Zudem ist auch eine geringere Rechenleistung der Hauptsteuereinheit nötig, da eine Verlagerung der Funktionen in die Nebensteuereinheiten erfolgt. Eine Hauptsteuereinheit kann somit bei gleicher Rechenleistung andere Funktionen wahrnehmen und lässt sich im Hinblick auf eine Luftfederung im Wesentlichen auf übergeordnete Kontrollfunktionen der Luftfederung beschränken, ohne eine zeitkritische Regelung der Luftfederung durchführen zu müssen.

Die Nebensteuereinheiten weisen jeweils mindestens einen Eingang zum Erfassen von Sensordaten auf. Mit dem Eingang ist mindestens ein Sensor verbindbar. Außerdem sind die Nebensteuereinheiten jeweils eingerichtet, Steuersignale am Ausgang in Abhängigkeit von den Sensorsignalen zu erzeugen. Vorzugsweise ist die Nebensteuereinheit eingerichtet, Steuersignale am Ausgang, somit in Abhängigkeit von den Sensorsignalen und einer Funktion, insbesondere einer hinterlegten, aufgerufenen Funktion, zu erzeugen. Besonders bevorzugt sind demnach Werte von Sensordaten oder daraus abgeleitete Werte mit einer Funktion, die in der Nebensteuereinheit ausgeführt wird, derart verknüpft, dass bestimmte Steuersignale am Ausgang erzeugt werden.

Im beispielhaften Fall der obengenannten Niveauregulierungsfunktion wird der Nebensteuereinheit beispielsweise ein aktueller Zustand der vorherrschenden Bodenfreiheit als Sensordaten zugeführt, sodass entsprechend am Ausgang ein Aktor zur Veränderung der Bodenfreiheit oder zum Beibehalten der Bodenfreiheit angesteuert werden kann. Eine komplette Regelung eines einzelnen abgeschlossenen Systems ist somit mit einer Nebensteuereinheit möglich, wenn beispielsweise Sensordaten als Ist-Wert betrachtet werden, die Funktion Soll-Wert-Vorgaben aufweist und eine Regelung über den Ausgang durch Ansteuern eines oder mehrerer Aktoren erfolgt.

Einzelne in sich abgeschlossene, eine Nebensteuereinheit umfassende Regelsysteme können demnach separat und unabhängig von der Hauptsteuereinheit autark eine Regelung übernehmen, nachdem diese durch Aufrufen einer Funktion von der Hauptsteuereinheit aktiviert wurden. Das weiter oben genannte Parametrieren der Funktion kann etwa eine Soll-Wert-Vorgabe für die Funktion repräsentieren.

Gemäß einer weiteren Ausführungsform ist die Nebensteuereinheit eingerichtet, mit dem Eingang Signale mindestens eines Sensors zu erfassen, der einen Abstands-, Höhen- und/oder Drucksensor umfasst. Insbesondere zum Einstellen eines Aktors zur Variation oder Konstanthalten einer Bodenfreiheit mit einer Nebensteuereinheit ist durch Erfassen von Abständen beispielsweise zwischen Achsen und Radeinbau oder zwischen Abstand des Unterbodens des Fahrzeugs zum Untergrund und/oder durch Aufnahme von Druckmesswerten mit einem Drucksensor zur Auswertung einer Beladungssituation eine komplette Regelbarkeit durch die Nebensteuereinheit ohne weitere Vorgaben durch eine Hauptsteuereinheit möglich.

Die Nebensteuereinheit ist auch eingerichtet, Sensorsignale an die Hauptsteuereinheit über die Datenverbindung zu übertragen. Dies ist erfindungsgemäß dann der Fall, wenn von der Hauptsteuereinheit über die Datenverbindung ein Befehl gesendet und dieser Befehl von der Nebensteuereinheit empfangen wird, dass beispielsweise ein Sensorsignal ausgelesen werden soll. Auf diese Weise wird die Hauptsteuereinheit demnach, auch wenn eine Regelung unter Verwendung von Sensoren und Aktoren an sich innerhalb der Nebensteuereinheit ausgeführt wird, als Kontrollinstanz für eine korrekte Funktion verwendet.

Die Hauptsteuereinheit ist so ausgebildet, dass sie intervallweise oder ausgelöst durch eine Abfrage einer wiederum übergeordneten Instanz anhand von Sensorsignalen oder anderen Daten einer Nebensteuereinheit die korrekte und/oder fehlerfreie Funktion der Nebensteuereinheit prüft.

Erfindunsgemäß sind die Nebensteuereinheiten jeweils eingerichtet, zumindest einen vordefinierten festgelegten Satz von Befehlen von der Hauptsteuereinheit zu empfangen und zu interpretieren. Demnach ist die Hauptsteuereinheit mit einem festen Satz von Befehlen ausgebildet, wobei die Interpretation eines Befehles in Abhängigkeit der Ausgestaltung einer in der Nebensteuereinheit hinterlegten Funktionen erfolgt.

Eine individuelle Anpassung des Luftfedersteuerungssystems kann demnach allein durch Anpassung der Nebensteuereinheiten erfolgen. So kann unabhängig vom individuellen Aufbau eines Fahrzeugs oder den Anforderungen des Fahrzeugs, in dem ein Luftfedersteuerungssystem eingesetzt werden soll, die Hauptsteuereinheit immer identisch sein. Die gleiche Hauptsteuereinheit ist demnach beispielsweise für eine Vielzahl unterschiedlicher individueller Fahrzeuge verwendbar, sodass aufgrund großer benötigter Stückzahlen eine günstigere Realisierung der Hauptsteuereinheit möglich ist.

Gemäß einer weiteren Ausführungsform ist die Datenverbindung eine Busverbindung. Insbesondere ist die Busverbindung eine CAN-Busverbindung. Eine als Busverbindung, insbesondere als CAN-Busverbindung ausgebildete Datenverbindung, ist für die Verbindung der Hauptsteuereinheit mit den Nebensteuereinheiten besonders vorteilhaft, da diese in heutigen Fahrzeugen ohnehin geplant oder vorhanden ist. Somit kann eine Hauptsteuereinheit beispielsweise im Bereich des Fahrzeugs angeordnet werden, in dem weitere übergeordnete Steuereinheiten vorhanden sind, während die Nebensteuereinheiten beispielsweise im Bereich nahe eines oder mehrerer zu regelnder Aktoren angeordnet sein können. Eine ohnehin vorhandene Busverbindung kann dann dafür genutzt werden, um die Kommunikation zwischen den Nebensteuereinheiten und der Hauptsteuereinheit zu realisieren, ohne dass zusätzliche Kabelverbindungen bereitgestellt werden müssen.

Außerdem betrifft die Erfindung ein Luftfedersystem, das ein Luftfedersteuerungssystem nach einer der vorgenannten Ausführungsformen umfasst. Das Luftfedersystem umfasst einen Aktor zum Verbinden mit einem Luftfedersteuerungssystem. Der Aktor ist ein Ventilantrieb und eingerichtet, die Durchflussmenge des mit dem Ventilantrieb zur Betätigung verbundenen Ventildurchgangs eines Ventils stufenlos oder mit mehr als drei Stufen zu betätigen. Hierdurch lässt sich etwa die Geschwindigkeit der Variation einer Bodenfreiheit einstellen. Beispielsweise lässt sich somit die Bodenfreiheit während der Fahrt mit einer geringeren Geschwindigkeit verändern als während des Stillstands, um beispielsweise während der Fahrt keinen abrupten Einfluss auf die Fahrdynamik auszuüben.

Insbesondere bei Omnibussen ergibt sich der Vorteil, dass im Stand des Busses zum Ein- und Aussteigen von Passagieren eine besonders schnelle Anpassung der Bodenfreiheit ermöglicht wird. Dies wird vorzugsweise durch dasselbe Ventil möglich, das während der Fahrt eine Niveauregelung unterstützt, ohne dass mehrere parallel geschaltete Ventile nötig sind.

Gemäß einer Ausführungsform weist der Ventilantrieb einen Schrittmotor auf. Ein Schrittmotor ist in einer Vielzahl von Stufen in einfacher Weise einstellbar, sodass in Abhängigkeit der Schrittweite des eingesetzten Schrittmotors eine Vielzahl von Stufen zur Betätigung des Ventils möglich ist. Gemäß einer Ausführungsform ist der Aktor des Luftfedersystems ausgebildet, um mit einem Ausgang einer Nebensteuereinheit verbunden zu werden.

Außerdem betrifft die Erfindung ein Fahrzeug, das insbesondere ein Nutzfahrzeug oder ein Personenkraftwagen ist und ein Luftfedersteuerungssystem nach einer der vorgenannten Ausführungsformen und/oder ein Luftfedersystem nach einer der vorgenannten Ausführungsformen umfasst.

Gemäß einer Ausführungsform weist das Fahrzeug mehrere Achsen auf, wobei das Luftfedersteuerungssystem eine Nebensteuereinheit pro Achse umfasst.

Ein individueller Aufbau des Luftfedersteuerungssystems in Abhängigkeit der Anzahl der Achsen wird somit ermöglicht.

Außerdem betrifft die Erfindung ein Verfahren zum Betrieb eines Fahrzeugs mit einem Luftfedersteuerungssystem nach einer der vorgenannten Ausführungsformen und/oder einem Luftfedersystem nach einer der vorgenannten Ausführungsformen.

Gemäß einer Ausführungsform des Verfahrens werden zum Betrieb Steuersignale am Ausgang mindestens einer Nebensteuereinheit in Abhängigkeit von Funktionen, die in der Nebensteuereinheit hinterlegt sind, und in Abhängigkeit von Befehlen, die von einer Hauptsteuereinheit an die Nebensteuereinheit gesendet werden, erzeugt. Vorzugsweise werden die Steuersignale zusätzlich in Abhängigkeit von Sensorsignalen mindestens eines mit der Nebensteuereinheit verbundenen Sensors erzeugt.

Weitere Ausführungsformen ergeben sich anhand der in den Figuren näher erläuterten Ausführungsbeispiele. Hierbei zeigen
Fig. 1 : ein Luftfedersteuerungssystem und
Fig. 2: ein Luftfedersystem gemäß einem Ausführungsbeispiel.

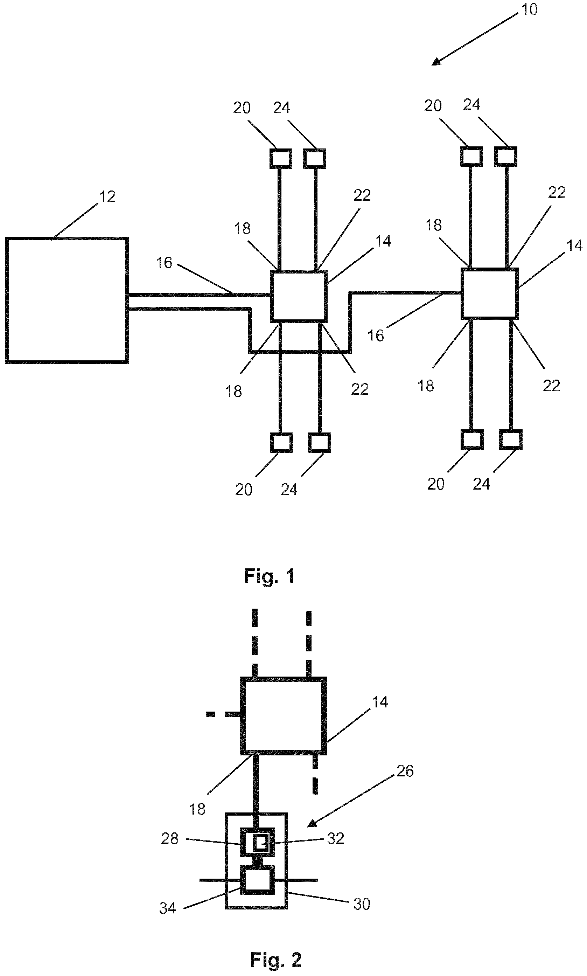

Fig. 1 zeigt ein Luftfedersteuerungssystem 10 nach einer der vorgenannten Ausführungsformen. Das Luftfedersteuerungssystem 10 umfasst eine Hauptsteuereinheit 12 und zwei Nebensteuereinheiten 14. Die Nebensteuereinheiten 14 sind jeweils über eine Datenverbindung 16 mit der Hauptsteuereinheit 12 verbunden. Demnach dient die Datenverbindung 16 zum Übertragen von Daten von der Hauptsteuereinheit 12 zu den Nebensteuereinheiten 14 und von den Nebensteuereinheiten 14 zur Hauptsteuereinheit 12.

In Fig. 1 ist die Datenverbindung 16 durch zwei einzelne Stränge dargestellt, die beispielsweise jeweils mehrere elektrische oder optische Leitungen umfassen.

Gemäß einem anderen, hier nicht dargestellten Ausführungsbeispiel der Erfindung sind diese beiden Stränge nicht separiert und es besteht eine gemeinsame Datenverbindung zwischen der Hauptsteuereinheit 12 und beiden Nebensteuereinheiten 14. Diese gemeinsame Datenverbindung ist vorzugsweise ein Bussystem.

Jede der Nebensteuereinheiten 14 weist zwei Ausgänge 18 auf, mit denen jeweils ein Aktor 20 elektrisch verbunden ist. Außerdem umfasst jede der Nebensteuereinheiten jeweils zwei Eingänge 22, mit denen jeweils ein Sensor 24 verbunden ist.

Das Luftfedersteuerungssystem ist nun derart ausgebildet, dass zunächst über die Hauptsteuereinheit 12 mittels der Datenverbindung 16 Funktionen in den Nebensteuereinheiten 18 aufgerufen und diese parametriert werden. Anhand dieser Funktionen werden dann Ausgangssignale an den Ausgängen 18 für die Aktoren 20 in Abhängigkeit der Funktion sowie von Sensordaten erzeugt, die über die Sensoren 24 den Eingängen 22 der Nebensteuereinheiten 14 bereitgestellt werden. Funktionen sind beispielsweise das Anheben oder Absenken eines Fahrzeugs mit dem Luftfedersteuerungssystem oder das Neigen des Fahrzeugs oder eine Niveauregulierung bei oder nach dem Beladen eines Fahrzeugs.

Fig. 2 zeigt ein Luftfedersystem 26, das mittels dem Luftfedersteuerungssystem 10 steuerbar ist. Hierbei weist das Luftfedersystem einen Aktor 20 auf, der als Ventilantrieb 28 ausgebildet ist. Der Ventilantrieb 28 ist demnach mit einem Ausgang 18 der Nebensteuereinheit 14 verbunden. Der Ventilantrieb 28 ist Bestandteil eines Ventils 30 und weist einen Schrittmotor 32 auf, um einen Ventildurchgang 34 des Ventils 30 stufenlos oder mit mehr als drei Stufen zu betätigen.

Das Ventil 30 wird also von der Nebensteuereinheit 14 derart angesteuert, dass für den Ventilantrieb 28 eine Stufe des Ventildurchgangs 34, die gewünscht ist, bereitgestellt wird. Der Ventilantrieb 28 stellt dann mit Hilfe des Schrittmotors 32 den Ventildurchgang 34 entsprechend der genwünschten Stufe ein. Hierdurch wird die Durchflussmenge durch das Ventil 30 derart variiert, dass beispielsweise ein langsames oder schnelles Anheben eines Fahrzeugs durch Füllen eines Zylinders mit Gas, insbesondere Luft, entsprechend der Durchflussmenge ermöglicht wird.

### Liste der Bezugszeichen (Bestandteil der Beschreibung)

- 10: Luftfedersteuerungssystem
- 12: Hauptsteuereinheit
- 14: Nebensteuereinheit
- 16: Datenverbindung
- 18: Ausgang zum Verbinden eines Aktors
- 20: Aktor
- 22: Eingang zum Erfassen von Sensordaten
- 24: Sensor
- 26: Luftfedersystem
- 28: Ventilantrieb
- 30: Ventil
- 32: Schrittmotor
- 34: Ventildurchgang

## Patentansprüche

1. Luftfedersteuerungssystem (10) für ein Nutzfahrzeug, wie einen Lastkraftwagen, oder für einen Personenkraftwagen, das Luftfedersteuerungssystem (10) umfassend eine Hauptsteuereinheit (12) zum Betreiben des Luftfedersteuerungssystems (10) und mindestens zwei Nebensteuereinheiten (14), die jeweils über eine separate oder gemeinsame Datenverbindung (16) mit der Hauptsteuereinheit (12) verbunden sind,
wobei die Nebensteuereinheiten (14) jeweils mindestens einen Ausgang (18) zum Ansteuern mindestens eines mit dem Ausgang (18) verbindbaren Aktors (20) aufweisen,
wobei in den Nebensteuereinheiten (14) jeweils mindestens eine Funktion zum Erzeugen von Steuersignalen am Ausgang (18) hinterlegt ist und wobei die Hauptsteuereinheit (12) Mittel aufweist, um durch Aussenden von Befehlen über die Datenverbindung (16) die hinterlegten Funktionen aufzurufen und/oder zu parametrieren,
wobei die Nebensteuereinheiten (14) jeweils mindestens einen Eingang (22) zum Erfassen von Sensordaten von mindestens einem mit dem Eingang (22) verbindbaren Sensor (24) aufweisen und die Nebensteuereinheiten (14) jeweils Mittel aufweisen, um Steuersignale am Ausgang (18) in Abhängigkeit von den Sensorsignalen am Eingang zu erzeugen,
**dadurch gekennzeichnet, dass**
- die Nebensteuereinheiten (14) jeweils eingerichtet sind, zumindest einen vordefinierten festgelegten Satz von Befehlen von der Hauptsteuereinheit (12) zu empfangen und zu interpretieren und die Nebensteuereinheiten (14) Mittel aufweisen, um darin jeweils einen vordefinierten festgelegten Satz der Funktionen zu hinterlegen, wobei eine Interpretation **eines der** Befehle in Abhängigkeit der Ausgestaltung einer in der Nebensteuereinheit hinterlegten Funktion erfolgt, und
die Nebensteuereinheiten (14) jeweils Mittel aufweisen, um Sensorsignale an die Hauptsteuereinheit (12) zu übertragen, wobei die Nebensteuereinheiten (14) jeweils Mittel aufweisen, um die Sensorsignale nach dem Empfang eines durch die Hauptsteuereinheit (12) gesendeten, über die Datenverbindung (16) empfangenen, Befehls an die Hauptsteuereinheit (12) zu übertragen, wobei die Hauptsteuereinheit (12) Mittel aufweist, um intervallweise oder ausgelöst durch eine Abfrage einer wiederum übergeordneten Instanz anhand der Sensorsignale oder anderer Daten einer der Nebensteuereinheiten (14) eine korrekte und/oder fehlerfreie Funktion dieser Nebensteuereinheit zu prüfen, und
- die Hauptsteuereinheit (12), auch wenn eine Regelung unter Verwendung von Sensoren (24) und Aktoren (20) an sich innerhalb der Nebensteuereinheit (14) ausführbar ist, als Kontrollinstanz für die korrekte und/oder fehlerfreie Funktion dieser Nebensteuereinheit (14) verwendbar ist.

2. Luftfedersteuerungssystem (10) nach Anspruch 1, wobei die Nebensteuereinheiten (14) jeweils Mittel aufweisen, um mit dem Eingang (22) Signale mindestens eines Sensors (24) zu erfassen, der einen Abstands-, Höhen und/oder Drucksensor umfasst.

3. Luftfedersteuerungssystem (10) nach Anspruch 1 oder 2, wobei
- die Hauptsteuereinheit (12) im Wesentlichen nur noch zum Aufruf und/oder zur Parametrierung der in den Nebensteuereinheiten hinterlegten Funktionen ausgebildet ist,

4. Luftfedersteuerungssystem (10) nach einem der vorhergehenden Ansprüche, wobei
- eine komplette Regelung eines einzelnen abgeschlossenen Systems mit einer der Nebensteuereinheiten (14) ermöglicht ist.

5. Luftfedersteuerungssystem (10) nach einem der vorhergehenden Ansprüche, wobei der mit dem Ausgang (18) verbindbare Aktor (20) ein Verstellantrieb (28) für ein Ventil (30) ist, insbesondere das Ventil (30) eine elektrische Magnetventilkomponente ist, insbesondere eine pneumatische oder hydraulische Ventilkomponente, wie ein Solenoidventil ist.

6. Luftfedersteuerungssystem (10) nach einem der vorhergehenden Ansprüche, wobei die Datenverbindung (16) eine Busverbindung, insbesondere eine CAN-Busverbindung, ist.

7. Luftfedereinrichtung mit einem Luftfedersteuerungssystem (10) nach einem der vorhergehenden Ansprüche und mit einem Luftfedersystem (26) steuerbar mittels des Luftfedersteuerungssystems (10), wobei das Luftfedersystem einen Aktor (20) zum Verbinden mit dem Luftfedersteuerungssystem (10) aufweist, der mit dem Luftfedersteuerungssystem (1) verbunden ist, und der Aktor (20) ein Ventilantrieb (28) ist, wobei der Ventilantrieb (28) eingerichtet ist, die Durchflussmenge des mit dem Ventilantrieb zur Betätigung verbundenen Ventildurchgangs (34) eines Ventils (30) stufenlos oder mit mehr als drei Stufen zu betätigen.

8. Luftfedereinrichtung nach Anspruch 7, wobei der Ventilantrieb (28) einen Schrittmotor (32) umfasst.

9. Luftfedereinrichtung nach Anspruch 7 oder 8, wobei der Aktor (20) zum Verbinden mit mindestens einem Ausgang (18) einer der Nebensteuereinheiten (14) ausgebildet ist und mit dem Ausgang (18) verbunden ist.

10. Fahrzeug, insbesondere ein Nutzfahrzeug, wie ein Lastkraftwagen, oder ein Personenkraftwagen, mit einem Luftfedersteuerungssystem (10) nach einem der Ansprüche 1 bis 6 und/oder einer Luftfedereinrichtung nach einem der Ansprüche 7 bis 9.

11. Fahrzeug nach Anspruch 10, wobei das Fahrzeug mehrere Achsen aufweist und das Luftfedersystem (10) eine Nebensteuereinheit (14) pro Achse umfasst.

12. Verfahren zum Betrieb eines Fahrzeugs nach Anspruch 10 oder 11 oder eines Fahrzeugs mit einer Luftfedereinrichtung nach einem der Ansprüche 7 bis 9 oder einem Luftfedersteuerungssystem (10) nach einem der Ansprüche 1 bis 6.

13. Verfahren nach Anspruch 12, wobei zum Betrieb Steuersignale am Ausgang (18) mindestens einer Nebensteuereinheit (14) in Abhängigkeit von Funktionen, die in der Nebensteuereinheit (14) hinterlegt sind, und in Abhängigkeit von Befehlen, die von einer Hauptsteuereinheit (12) an die Nebensteuereinheit (12) gesendet werden, erzeugt werden.

## Claims

1. Air suspension control system (10) for a commercial vehicle, such as a truck, or for a passenger car, the air suspension control system (10) comprising a main control unit (12) for operating the air suspension control system (10) and
at least two secondary control units (14), which are each connected to the main control unit (12) via a separate or shared data connection (16),
the secondary control units (14) each having at least one output (18) for controlling at least one actuator (20) which can be connected to the output (18),
at least one function for generating control signals at the output (18) being stored in each of the secondary control units (14), and the main control unit (12) having means for retrieving and/or parameterizing the stored functions by sending commands via the data connection (16),
the secondary control units (14) each having at least one input (22) for acquiring sensor data from at least one sensor (24) which can be connected to the input (22), and the secondary control units (14) each having means for generating control signals at the output (18) according to the sensor signals at the input,
**characterized in that**
- the secondary control units (14) are each designed to receive and interpret at least one predefined fixed set of commands from the main control unit (12) and the secondary control units (14) have means for each storing therein a predefined fixed set of functions, one of the commands being interpreted according to the design of a function stored in the secondary control unit, and
the secondary control units (14) each have means for transmitting sensor signals to the main control unit (12), the secondary control units (14) each having means for transmitting the sensor signals to the main control unit (12) after receiving a command sent by the main control unit (12) and received via the data connection (16), the main control unit (12) having means for checking, at intervals or triggered by a query from a higher-level instance and on the basis of the sensor signals or other data of one of the secondary control units (14), the correct and/or error-free functioning of this secondary control unit, and
- even if control using sensors (24) and actuators (20) can be carried out within the secondary control unit (14), the main control unit (12) can be used as a control instance for the correct and/or error-free functioning of this secondary control unit (14).

2. Air suspension control system (10) according to claim 1, wherein the secondary control units (14) each have means for acquiring, by the input (22), signals from at least one sensor (24), which includes a distance, height and/or pressure sensor.

3. Air suspension control system (10) according to claim 1 or 2, wherein
- the main control unit (12) is substantially only designed to retrieve and/or parameterize the functions stored in the secondary control units.

4. Air suspension control system (10) according to any of the preceding claims, wherein
- complete control of a single closed system is possible with one of the secondary control units (14).

5. Air suspension control system (10) according to any of the preceding claims, wherein the actuator (20) which can be connected to the output (18) is an adjustment drive (28) for a valve (30), the valve (30) being in particular an electrical magnetic valve component, in particular a pneumatic or hydraulic valve component, such as a solenoid valve.

6. Air suspension control system (10) according to any of the preceding claims, wherein the data connection (16) is a bus connection, in particular a CAN bus connection.

7. Air suspension device comprising an air suspension control system (10) according to any of the preceding claims and comprising an air suspension system (26) which can be controlled by means of the air suspension control system (10), wherein the air suspension system has an actuator (20) for connection to the air suspension control system (10), which actuator is connected to the air suspension control system (1), and the actuator (20) is a valve drive (28), wherein the valve drive (28) is designed to actuate, continuously or in more than three stages, the volumetric flow through the valve opening (34) of a valve (30) connected to the valve drive for actuation.

8. Air suspension device according to claim 7, wherein the valve drive (28) comprises a stepper motor (32).

9. Air suspension device according to claim 7 or 8, wherein the actuator (20) is designed to be connected to at least one output (18) of one of the secondary control units (14) and is connected to the output (18).

10. Vehicle, in particular a commercial vehicle, such as a truck, or a passenger car, comprising an air suspension control system (10) according to any of claims 1 to 6 and/or an air suspension device according to any of claims 7 to 9.

11. Vehicle according to claim 10, wherein the vehicle has a plurality of axles and the air suspension system (10) comprises one secondary control unit (14) per axle.

12. Method for operating a vehicle according to claim 10 or 11 or a vehicle comprising an air suspension device according to any of claims 7 to 9 or an air suspension control system (10) according to any of claims 1 to 6.

13. Method according to claim 12, wherein, for operation, control signals are generated at the output (18) of at least one secondary control unit (14) according to functions stored in the secondary control unit (14) and according to commands sent from a main control unit (12) to the secondary control unit (12).

## Revendications

1. Système de commande de suspension pneumatique (10) pour un véhicule utilitaire, tel qu'un camion, ou pour une voiture de tourisme, le système de commande de suspension pneumatique (10) comprenant une unité de commande principale (12) permettant de faire fonctionner le système de commande de suspension pneumatique (10), et
au moins deux unités de commande auxiliaires (14), qui sont chacune reliées à l'unité de commande principale (12) par l'intermédiaire d'une liaison de données (16) séparée ou commune,
dans lequel les unités de commande auxiliaires (14) présentent respectivement au moins une sortie (18) pour la commande d'au moins un actionneur (20) pouvant être relié à la sortie (18),
dans lequel respectivement au moins une fonction permettant de générer des signaux de commande à la sortie (18) est enregistrée dans les unités de commande auxiliaires (14), et dans lequel l'unité de commande principale (12) présente des moyens pour appeler et/ou paramétrer les fonctions enregistrées par l'émission d'instructions par l'intermédiaire de la liaison de données (16),
dans lequel les unités de commande auxiliaires (14) présentent respectivement au moins une entrée (22) pour la collecte de données de capteur d'au moins un capteur (24) pouvant être relié à l'entrée (22), et les unités de commande auxiliaires (14) présentent respectivement des moyens pour générer des signaux de commande à la sortie (18) en fonction des signaux de capteur à l'entrée,
**caractérisé en ce que**
- les unités de commande auxiliaires (14) sont respectivement configurées pour recevoir et interpréter au moins un ensemble fixe prédéfini d'instructions de l'unité de commande principale (12), et les unités de commande auxiliaires (14) présentent des moyens pour y enregistrer respectivement un ensemble fixe prédéfini des fonctions, dans lequel une interprétation de l'une des instructions s'effectue en fonction de la conception d'une fonction enregistrée dans l'unité de commande auxiliaire, et
les unités de commande auxiliaires (14) présentent respectivement des moyens pour transmettre des signaux de capteur à l'unité de commande principale (12), dans lequel les unités de commande auxiliaires (14) présentent respectivement des moyens pour transmettre les signaux de capteur à l'unité de commande principale (12) après la réception d'une instruction envoyée par l'unité de commande principale (12) et reçue par l'intermédiaire de la liaison de données (16), dans lequel l'unité de commande principale (12) présente des moyens pour vérifier de façon intermittente ou de manière déclenchée, par une interrogation d'une instance elle-même supérieure à l'aide des signaux de capteur ou d'autres données d'une des unités de commande auxiliaires (14), un fonctionnement correct et/ou sans erreur de cette unité de commande auxiliaire, et
- l'unité de commande principale (12), même si une régulation utilisant des capteurs (24) et des actionneurs (20) peut être exécutée en soi à l'intérieur de l'unité de commande auxiliaire (14), peut être utilisée comme instance de contrôle pour le fonctionnement correct et/ou sans erreur de cette unité de commande auxiliaire (14).

2. Système de commande de suspension pneumatique (10) selon la revendication 1, dans lequel les unités de commande auxiliaires (14) présentent respectivement des moyens pour détecter, avec l'entrée (22), des signaux d'au moins un capteur (24) qui comprend un capteur de distance, de hauteur et/ou de pression.

3. Système de commande de suspension pneumatique (10) selon la revendication 1 ou 2, dans lequel
- l'unité de commande principale (12) n'est sensiblement conçue que pour appeler et/ou paramétrer les fonctions enregistrées dans les unités de commande auxiliaires.

4. Système de commande de suspension pneumatique (10) selon l'une des revendications précédentes, dans lequel
- une régulation complète d'un seul système fermé est possible avec l'une des unités de commande auxiliaires (14).

5. Système de commande de suspension pneumatique (10) selon l'une des revendications précédentes, dans lequel l'actionneur (20) pouvant être relié à la sortie (18) est un entraînement de réglage (28) pour une soupape (30), la soupape (30) est en particulier un composant de soupape magnétique électrique, en particulier un composant de soupape pneumatique ou hydraulique, tel qu'une soupape à solénoïde.

6. Système de commande de suspension pneumatique (10) selon l'une des revendications précédentes, dans lequel la liaison de données (16) est une liaison par bus, en particulier une liaison par bus CAN.

7. Dispositif de suspension pneumatique comportant un système de commande de suspension pneumatique (10) selon l'une des revendications précédentes et comportant un système de suspension pneumatique (26) pouvant être commandé à l'aide du système de commande de suspension pneumatique (10), dans lequel le système de suspension pneumatique présente un actionneur (20) pour la liaison avec le système de commande de suspension pneumatique (10), lequel actionneur est relié au système de commande de suspension pneumatique (10), et l'actionneur (20) est un entraînement de soupape (28), dans lequel l'entraînement de soupape (28) est configuré pour actionner en continu ou avec plus de trois niveaux le débit de passage du passage de soupape (34) d'une soupape (30), lequel passage de soupape est relié à l'entraînement de soupape pour l'actionnement.

8. Dispositif de suspension pneumatique selon la revendication 7, dans lequel l'entraînement de soupape (28) comprend un moteur pas à pas (32).

9. Dispositif de suspension pneumatique selon la revendication 7 ou 8, dans lequel l'actionneur (20) est conçu pour être relié à au moins une sortie (18) de l'une des unités de commande auxiliaires (14) et est relié à la sortie (18).

10. Véhicule, en particulier véhicule utilitaire, tel qu'un camion, ou voiture de tourisme, comportant un système de commande de suspension pneumatique (10) selon l'une des revendications 1 à 6 et/ou un dispositif de suspension pneumatique selon l'une des revendications 7 à 9.

11. Véhicule selon la revendication 10, dans lequel le véhicule présente plusieurs essieux et le système de suspension pneumatique (10) comprend une unité de commande auxiliaire (14) par essieu.

12. Procédé permettant de faire fonctionner un véhicule selon la revendication 10 ou 11 ou un véhicule comportant un dispositif de suspension pneumatique selon l'une des revendications 7 à 9 ou un système de commande de suspension pneumatique (10) selon l'une des revendications 1 à 6.

13. Procédé selon la revendication 12, dans lequel, pour le fonctionnement, des signaux de commande sont générés à la sortie (18) d'au moins une unité de commande auxiliaire (14) en fonction de fonctions qui sont enregistrées dans l'unité de commande auxiliaire (14) et en fonction d'instructions qui sont envoyées par une unité de commande principale (12) à l'unité de commande auxiliaire (12).
